# EUROPÄISCHE PATENTSCHRIFT

(11) **EP 3 791 962 B1**
(45) Veröffentlichungstag und Bekanntmachung des Hinweises auf die Patenterteilung: **01.01.2025**
(21) Anmeldenummer: 20192539.3
(22) Anmeldetag: 25.08.2020
(51) Int. Cl.: B02C 19/00, B02C 19/18, H01M 6/52, H01M 10/54, B03B 9/06

(54) **VERFAHREN UND VORRICHTUNG ZUM ZERKLEINERN VON ALKALIMETALLHALTIGEN STROMSPEICHERN**
METHOD AND DEVICE FOR COMMINUTING ELECTRICITY STORAGE DEVICES CONTAINING ALKALI METALS
PROCÉDÉ ET DISPOSITIF DE BROYAGE DES ACCUMULATEURS DE COURANT CONTENANT MÉTAUX ALCALINS

(30) Priorität: 10.09.2019 DE 102019006386
(43) Veröffentlichungstag der Anmeldung: 17.03.2021
(73) Patentinhaber: Messer SE & Co. KGaA, 65812 Bad Soden (DE)
(72) Erfinder: Dietrich, Oliver, 47800 Krefeld (DE); Herzog, Friedhelm, 47803 Krefeld (DE)
(74) Vertreter: Münzel, Joachim R.

(56) Entgegenhaltungen:
- DE-A1- 102009 027 179
- DE-A1- 4 424 825
- US-A- 5 888 463

## Beschreibung

Die Erfindung betrifft ein Verfahren zum Zerkleinern von alkalimetallhaltigen Stromspeichern, bei dem die Stromspeicher mit flüssigem Stickstoff gekühlt werden, der beim Wärmekontakt mit den Stromspeichern zumindest weitgehend verdampft, und die gekühlten Stromspeicher in einer Zerkleinerungseinrichtung in Fraktionsbestandteile zerlegt werden. Die Erfindung betrifft des Weiteren eine entsprechende Vorrichtung.

Defekte oder verbrauchte alkalimetallhaltige Stromspeicher - unter dem Begriff "Stromspeicher" werden im Folgenden sowohl nicht wiederaufladbare Batterien (Primärzellen) als auch wiederaufladbare Akkumulatoren (Sekundärzellen) zusammengefasst - werden heute üblicherweise mit Hochtemperaturverfahren behandelt, um wertvolle Materialien, wie beispielsweise Kupfer, Aluminium, Kobalt oder Seltene Erden, zu recyceln. Derartige Verfahren sind beispielsweise aus der US 2013/0071306 A1 oder der EP 3 517 641 A1 bekannt. Dabei liefern der Restenergiegehalt der Stromspeicher sowie die Reaktion von Lithium mit Luft oder Feuchtigkeit Wärme, die für das Verfahren genutzt werden kann.

Werden die zu recycelnden Stromspeicher zunächst einem Zerkleinerungsverfahren unterzogen, stört diese Wärme erheblich. Insbesondere die Reaktion von Alkalimetallen wie Lithium mit Wasser, Luft oder Stickstoff kann so heftig verlaufen, dass die Zerkleinerungsanlagen in Brand geraten oder sogar explodieren. Deshalb ist es erforderlich, die Reaktionen der Alkalimetalle so zu bremsen, dass der Zerkleinerungsprozess gefahrlos durchgeführt werden kann; dann besteht auch die Chance, die in den Stromspeichern enthaltenen Alkalimetalle zu recyceln.

So ist etwa aus der DE 44 24 825 A1 ein Verfahren zum Entsorgen von entladenen und geladenen elektrischen Feststoff-Batterien, insbesondere von Lithium enthaltenden Batterien, bekannt, bei dem die Batterien vor dem Zerkleinern, beispielsweise in einer Schredder-Anlage, auf eine solch tiefe Temperatur abgekühlt werden, dass eine chemische Reaktion der vom Metallgehäuse befreiten Inhaltsstoffe bei normalen Temperatur- und Druckbedingungen und Sauerstoffeinwirkung im Wesentlichen nicht mehr stattfindet. Zum Kühlen der Batterien auf eine Temperatur zwischen -80°C und -190°C kommt flüssiger Stickstoff oder flüssiges Argon als Kühlmittel zum Einsatz. Im Anschluss an die Kältebehandlung erfolgt die Zerkleinerung der Batterien in einer inerten, aus verdampftem Kühlmittel bestehenden Atmosphäre. Die entstehenden Fraktionsteile werden abschließend einer Trennbehandlung unterzogen.

Aus der DE 10 2009 027 179 A1 ist ein Verfahren zum Zerkleinern von Lithium-Ionen- Batterien bekannt, bei dem die Batterien vor oder während des Zerkleinerungsprozesses mi einem Kühlmedium, beispielsweise Wasser, Flüssigstickstoff oder Trockeneis, gekühlt werden. Zugleich wird vorgeschlagen, den Zerkleinerungsprozess in einer Inertgasatmosphäre durchzuführen, wobei als Inertgas bevorzugt Stickstoff oder Argon zum Einsatz kommt.

Eine Kühlung mit flüssigem Stickstoff kommt jedoch zumindest bei Recyclinggut mit hohen Anteilen an Alkalimetallen, insbesondere Lithium, aus den oben genannten Gründen kaum in Betracht und/oder erfordert zusätzliche aufwändige Sicherheitsmaßnahmen. Eine auf flüssigem Argon fußende Kühlung reduziert zwar die Explosionsgefahr, ist jedoch wegen des damit verbundenen hohen Argonverbrauchs sehr teuer und insbesondere bei großen Mengen an wiederzuverwertenden Batterien wirtschaftlich nicht darstellbar. Das Recycling von Lithium wird daher heute aus ökonomischen und technischen Gründen kaum durchgeführt. Lithium und andere Alkalimetalle sind aber ein zunehmend wichtiger werdender Rohstoff, der z.B. wegen der stark wachsenden Elektromobilität knapp werden könnte; es besteht also ein Bedürfnis nach einem wirtschaftlich vertretbaren Verfahren zum Recyceln von Lithium.

Der Erfindung liegt die Aufgabe zu Grunde, eine Möglichkeit zum Zerkleinern von alkalimetallhaltigen, insbesondere Lithium enthaltenden, Stromspeichern als Vorbehandlung zu einem Recyclingverfahren zu schaffen, das mit vergleichsweise geringen Kosten betrieben werden kann und mit geringen Gefahren verbunden ist.

Gelöst ist diese Aufgabe durch das Verfahren gemäß Anspruch 1, wonach in der Zerkleinerungseinrichtung im Anschluss an die Kühlung der Stromspeicher Argon, unter Ausbildung einer im Wesentlichen aus Argon bestehenden Atmosphäre in der Zerkleinerungseinrichtung, zugeführt wird, das sich beim thermischen Kontakt mit den Stromspeichern und/oder deren Fraktionsbestandteilen erwärmt und anschließend aus der Zerkleinerungseinrichtung abgeführt wird, wobei zumindest ein Teilstrom des aus der Zerkleinerungseinrichtung abgeführten, erwärmten Argons in einem Kühler gekühlt und erneut zur Kühlung der Stromspeicher in der Zerkleinerungseinrichtung eingesetzt wird.

Erfindungsgemäß werden die Stromspeicher also einer zweifache Behandlung mit unterschiedlichen Gasen unterworfen. Zum einen erfolgt eine Kühlung der noch intakten Stromspeicher mit flüssigem Stickstoff, zum andern wird der Innenraum der Zerkleinerungsvorrichtung vor deren Ingangsetzung mir Argon inertisiert.

Flüssiger Stickstoff ist ein effizientes und vergleichsweise preisgünstiges Kühlmedium. Durch den direkten Kontakt mit dem bei einer Temperatur von etwa -196°C vorliegendem flüssigen Stickstoff werden die Stromspeicher auf eine niedrige Temperatur von bevorzugt unter 0°C gebracht und damit die Zündenergie deutlich reduziert. Der dabei verdampfende Stickstoff wird abgeführt und kann einer weiteren Nutzung, beispielsweise als Inertgas, zugeführt werden.

Durch die Zuführung des Argons in die Zerkleinerungseinrichtung wird eine Reaktion von Sauerstoff, Stickstoff, Wasserdampf oder anderen Atmosphärenbestandteilen mit Alkalimetallen, insbesondere mit Lithium, Natrium oder Kalium, aus den Fraktionen der aufgebrochenen Stromspeicher wirksam vermieden. Insbesondere verdrängt das zugeführte Argon Stickstoff, der nach der Kühlung der Stromspeicher noch in der Zerkleinerungseinrichtung vorliegt bzw. zusammen mit den Stromspeichern in die Zerkleinerungseinrichtung eindringt.

Im einfachsten Fall befinden sich die Stromspeicher schon während des Kühlens in der Zerkleinerungseinrichtung. In diesem Fall wird der Zerkleinerungseinrichtung flüssiger Stickstoff zugeführt, der beim Wärmekontakt der Stromspeicher zum größten Teil verdampft. Sofern sich nach der Kühlung noch Reststickstoff in erheblichen Mengen in der Zerkleinerungseinrichtung befindet, wird dieser durch das anschließend zugeführte Argon herausgedrängt.

Bevorzugt jedoch erfolgt die Kühlung mit flüssigem Stickstoff in einer von der Zerkleinerungseinrichtung getrennten Kühleinrichtung, und die Stromspeicher werden von der Kühleinrichtung zur Zerkleinerungseinrichtung transportiert. Die Kühlung und Zerkleinerung der Stromspeicher kann dabei chargenweise oder kontinuierlich erfolgen. Bei einer kontinuierlichen Behandlung werden die gekühlten Stromspeicher einer Kühleinrichtung zugeführt, in dieser mittels flüssigem Stickstoff gekühlt und über eine Fördereinrichtung oder eine Verbindungsleitung kontinuierlich der Zerkleinerungseinrichtung zugeführt. Der Transport der Stromspeicher von der Kühleinrichtung in die Zerkleinerungseinrichtung erfolgt dabei bevorzugt unter Luftabschluss in einer inerten Atmosphäre, die beispielsweise aus Stickstoff und/oder Argon besteht. Jedoch ist darauf zu achten, dass während des Verfahrensablaufs die Stickstoff-Atmosphäre in der Kühleinrichtung und die Argon-Atmosphäre in der Zerkleinerungseinrichtung so weit wie möglich getrennt bleiben und sich nicht oder nur im unwesentlichen Umfang vermischen. Dies erfolgt beispielsweise dadurch, dass die Stromspeicher zwischen Kühleinrichtung und Zerkleinerungseinrichtung eine Schleuse durchlaufen.

Im Chargenbetrieb wird jeweils eine vorgegebene Menge an Stromspeichern zunächst in einer Kühleinrichtung, beispielsweise einem Bad aus flüssigem Stickstoff gekühlt oder mit flüssigem Stickstoff besprüht. Die gekühlten Stromspeicher werden dann zur Zerkleinerungseinrichtung transportiert, die vor Beginn des Zerkleinerungsvorgangs mit Argon geflutet wird und/oder in der bereits eine Argon-Atmosphäre vorliegt. Auch hier empfiehlt es sich, den Transport der Stromspeicher aus dem Bad bzw. der Kühleinrichtung in die Zerkleinerungseinrichtung unter Luftabschluss in einer inerten Atmosphäre aus beispielsweise Argon und/oder Stickstoff durchzuführen.

Die in der Zerkleinerungseinrichtung befindlichen oder dieser zugeführten gekühlten Stromspeicher werden bevorzugt auch während und/oder nach dem Zerkleinerungsvorgang weiter gekühlt, um die beim Zerkleinerungsvorgang eingetragene Wärme abzuführen. Eine vorteilhafte Ausgestaltung der Erfindung sieht daher vor, der Zerkleinerungseinrichtung flüssiges oder kaltes gasförmigem Argon zuzuführen, das zumindest einen Teil der durch den Zerkleinerungsprozess eingetragenen Wärme aufnimmt und anschließend abgeführt wird. Auch dieses Argon kann einer weiteren Verwendung zugeführt werden; insbesondere dient das Argon als Inertgas im weiteren, bei der Rückgewinnung der Alkalimetalle durchgeführten Verfahrensschritten.

Um das Verfahren noch effizienter zu gestalten ist es vorteilhaft, zumindest einen Teilstrom des aus der Zerkleinerungseinrichtung abgeführten, erwärmten Argons in einem Kühler zu kühlen und erneut zur Kühlung des Aufgabeguts in der Zerkleinerungseinrichtung einzusetzen. Die Kühlung des Argon-Teilstroms im Kühler erfolgt dabei beispielsweise mit einer Kältemaschine oder in einem Wärmetauscher durch thermischen Kontakt mit flüssigem Stickstoff oder einem anderen kryogenen Kältemittel. In einer besonders bevorzugten Ausführungsform der Erfindung erfolgt zumindest ein Teil der Kühlung des Argons im einem Wärmetauscher durch indirekten thermischen Kontakt mit Stickstoff, der zuvor in der Kühleinrichtung zur Kühlung der Stromspeicher eingesetzt wurde. Dieser Stickstoff weist noch einen erheblichen Kälteinhalt auf. Im Übrigen sind auch Mischformen denkbar, beispielsweise erfolgt die Kühlung des rückgeführten Argons teilweise durch Wärmetausch mit flüssigem Stickstoff aus einer Stickstoffquelle und teilweise durch Wärmetausch mit dem aus der Kühleinrichtung stammendem verdampftem Stickstoff.

Die Aufgabe der Erfindung wird auch durch eine Vorrichtung mit den Merkmalen des Patentanspruchs 6 gelöst.

Eine erfindungsgemäße Vorrichtung zum Zerkleinern von alkalimetallhaltigen Stromspeichern umfasst eine Kühleinrichtung, die eine Zuführung für die Stromspeicher, eine mit einer Quelle für flüssigen Stickstoff strömungsverbundene Zuleitung für flüssigen Stickstoff sowie eine Ausleitung für gasförmigen Stickstoff aufweist, und eine Zerkleinerungseinrichtung, die mit einer Zuführung für die in der Kühleinrichtung gekühlten Stromspeicher und einer Ausgabe für die bei der Zerkleinerung entstandenen Fraktionsbestanteile der Stromspeicher ausgerüstet ist und die mit einer an eine Quelle für Argon angeschlossenen Zuleitung sowie mit einer Gasausleitung für strömungsverbunden ist.

Erfindungsgemäß ist dabei die Gasausleitung der Zerkleinerungseinrichtung über eine Rückleitung mit der Zerkleinerungseinrichtung oder einer in die Zerkleinerungseinrichtung einmündenden Zuleitung strömungsverbunden ist, wobei in der Rückleitung ein Kühler zum Kühlen des Argons angeordnet ist.

Bei den Zuführungen für die Stromspeicher in die Kühleinrichtung und in die Zerkleinerungseinrichtung handelt es sich im einfachsten Fall jeweils um eine bevorzugt verschließbare Öffnung, durch die die Stromspeicher zugeführt werden. Für einen kontinuierlichen Betrieb umfasst jedoch zumindest die Zuführung in die Kühleinrichtung eine Aufgabeeinheit, die die kontinuierliche Zuführung einer genau dosierten Menge an Stromspeichern ermöglicht. Die Zuführung des flüssigen Stickstoffs wird bevorzugt jeweils mit einer Regeleinrichtung in Abhängigkeit von gemessenen Parametern, wie beispielsweise der Temperatur in der Kühleinrichtung geregelt. Um die während des Zerkleinerungsvorgangs eingetragene Wärme abzuführen, wird der Zerkleinerungseinrichtung bevorzugt kaltes gasförmiges oder flüssiges Argon zugeführt, dessen Zustrom gleichfalls bevorzugt in Abhängigkeit von gemessenen Parametern geregelt wird, beispielsweise der Temperatur oder der Argon-Konzentration in der Atmosphäre im Innern der Zerkleinerungseinrichtung.

Die Kühleinrichtung umfasst bevorzugt eine in einem Gehäuse aufgenommene und mit einer Zuführung für flüssigen Stickstoff ausgerüstete Fördereinrichtung, beispielsweise eine in einem Gehäuse angeordnete Förderschnecke oder ein in einem Kühltunnel aufgenommenes Förderband, in der bzw. auf dem die Stromspeicher eine kalte Stickstoffatmosphäre, eine Flüssigstickstoff-Sprüheinrichtung und/oder ein Bad aus flüssigem Stickstoff durchlaufen.

Ergänzend oder anstelle der vorgenannten Fördereinrichtung umfasst die Kühleinrichtung einen Behälter, der zur Aufnahme eines Bades aus flüssigem Stickstoff bestimmt ist, in welchem die Stromspeicher gekühlt werden. Die Überführung der Stromspeicher aus dem Behälter in die Zerkleinerungseinrichtung erfolgt dann beispielsweise mittels einer geeigneten Transporteinrichtung, beispielsweise einem Förderband oder einem Kran. Denkbar ist auch, den Behälter unmittelbar an einer Aufgabeöffnung der Zerkleinerungseinrichtung anzuordnen und die Stromspeicher nach erfolgter Kühlung durch Öffnen eines die Aufgabeöffnung verschließenden Elements, etwa einer Klappe oder eines Schiebers in die Zerkleinerungseinrichtung hineinfallen zu lassen.

Eine besonders vorteilhafte Ausgestaltung der Erfindung sieht vor, dass die Kühleinrichtung über eine Verbindungsleitung mit der Zerkleinerungseinrichtung verbunden ist und in der Verbindungsleitung eine Schleuse zur Trennung der Stickstoff-Atmosphäre in der Kühleinrichtung und der Argon-Atmosphäre in der Zerkleinerungseinrichtung vorgesehen ist. Kühleinrichtung und Zerkleinerungseinrichtung stellen also (mit Ausnahmen der Zu- und Ableitungen für das jeweilige Gas) ein geschlossenes System dar, durch das die Stromspeicher von der Kühleinrichtung zur Zerkleinerungseinrichtung transportiert werden können, ohne dass es zu einem Kontakt der Stromspeicher mit Luft aus der Umgebung kommt. Gleichzeitig sind Kühleinrichtung und Zerkleinerungseinrichtung durch die Schleuse, bei der es sich beispielsweise um eine Zellenradschleuse handelt, derart voneinander getrennt, dass sich die Atmosphären beider Einrichtungen im Wesentlichen nicht vermischen.

Als bevorzugte Zerkleinerungseinrichtung ist eine Mühle, ein Schredder, eine Presse, ein Brecher, eine Sägeeinrichtung oder ein Schneidwerkzeug oder eine Kombination aus zwei oder mehr dieser Einrichtungen vorgesehen.

Die Erfindung ist dadurch gekennzeichnet, dass die Gasausleitung der Zerkleinerungseinrichtung über eine Rückleitung mit der Zerkleinerungseinrichtung oder einer in die Zerkleinerungseinrichtung einmündenden Zuleitung strömungsverbunden ist, wobei in der Rückleitung ein Kühler angeordnet ist. In diesem Falle wird der Zerkleinerungseinrichtung Argon in flüssigem oder kaltem gasförmigem Zustand zugeführt, das sich in der Zerkleinerungseinrichtung durch Wärmetausch mit den Stromspeichern und/oder deren beim Zerkleinerungsvorgang entstehenden Fraktionen erwärmt. Das erwärmte Argon wird über die Gasableitung abgezogen und zumindest in einem Teilstrom über die Rückleitung der Zerkleinerungseinrichtung erneut zugeführt, wobei es zuvor im Kühler auf eine vorgegebene Temperatur abgekühlt wurde. Das auf dieser Weise im Kreislauf geführte Argon kann dabei sogar den ganz überwiegenden Teil der Kühlaufgabe und der Inertisierungsaufgabe in der Zerkleinerungseinrichtung übernehmen, sodass die Argon-Zuleitung nur zum Ersatz für solches Argon dient, das insbesondere zusammen mit den fraktionierten Stromspeichern aus der Zerkleinerungsvorrichtung entweicht.

Der Kühler zum Kühlen des rückgeführten Argons umfasst bei dieser Ausgestaltung beispielsweise eine Kältemaschine oder einen Wärmetauscher, in dem das Argon in indirekten Wärmekontakt mit einem kalten Medium, beispielsweise flüssigem oder kalten gasförmigem Stickstoff tritt. Der Wärmetauscher kann dazu beispielsweise mit dem gleichen Stickstofftank in Strömungsverbindung stehen, aus dem auch der Stickstoff für die Kühleinrichtung entnommen wird. In einer besonders zweckmäßigen Ausgestaltung umfasst der Kühler einen indirekten Wärmetauscher, dessen Wärmeübertragungsflächen auf der einen Seite mit der Rückleitung, auf der anderen Seite mit der Ausleitung für gasförmigen Stickstoff der Kühleinrichtung strömungsverbunden sind. In diesem Falle wird also die Restkälte des verdampften Stickstoffs aus der Kühleinrichtung zur Kühlung des rückgeführten Argons eingesetzt.

Dem erfindungsgemäßen Verfahren kann im Übrigen eine Vorbehandlung der Stromspeicher vorgeschaltet sein, während der sie entladen werden, beispielsweise werden die Stromspeicher vor Beginn des erfindungsgemäßen Verfahrens dazu in ein Elektrolytbad getaucht.

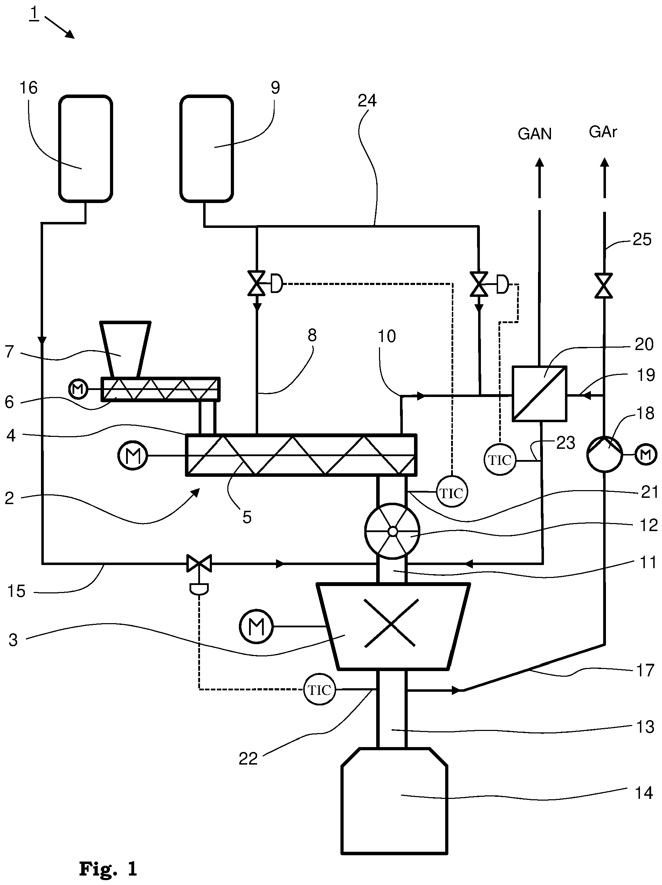

Anhand der Zeichnung soll ein Ausführungsbeispiel der Erfindung näher erläutert werden. Die einzige Zeichnung (Fig. 1) zeigt schematisch den Aufbau einer erfindungsgemäßen Vorrichtung.

Die in Fig. 1 gezeigte Vorrichtung 1 zum Zerkleinern alkalimetallhaltiger Stromspeicher umfasst eine Kühleinrichtung 2 und eine Zerkleinerungseinrichtung 3. Bei der Kühleinrichtung 2 handelt es sich im hier gezeigten Ausführungsbeispiel um eine innerhalb eines gasdichten Gehäuses 4 aufgenommene Förderschnecke 5. In das Gehäuse 4 mündet eine Aufgabeeinheit 6 samt Aufgabetrichter 7 ein, die die Zuführung einer dosierten Menge an zu zerkleinernden Stromspeichern erlaubt. Weiterhin mündet in das Gehäuse 4 eine Zuleitung 8 zum Zuführen von flüssigem Stickstoff ein, der in einem Tank 9 bevorratet wird. Eine Stickstoff-Ausleitung 10 zum Abführen von in der Kühleinrichtung 2 verdampftem Stickstoff führt aus dem Gehäuse der Kühleinrichtung 2 heraus.

Über eine Verbindungsleitung 11 gelangen die in der Kühleinrichtung 2 gekühlten Stromspeicher in die Zerkleinerungseinrichtung 3. Bei der Zerkleinerungseinrichtung 3 handelt es sich im hier gezeigten Ausführungsbeispiel um eine in einem gasdichten Gehäuse aufgenommene Mühle. In der Verbindungsleitung 11 ist eine Schleuse 12, beispielsweise eine Zellenradschleuse, angeordnet. Ausgangsseitig ist die Zerkleinerungseinrichtung 3 mit einer Ausgangsleitung 13 zum Abtransportieren der zerkleinerten Fraktionsteile der Stromspeicher ausgerüstet, die - wie hier gezeigt - einem Behälter 14 oder einer (hier nicht gezeigten) Transporteinrichtung zugeführt werden. Aus dem Behälter 14 bzw. mittels der Transporteinrichtung werden die Fraktionsteile weiteren, hier nicht gezeigten Behandlungsschritten zugeführt, um die in ihnen enthaltenen verwertbaren Rohstoffe, namentlich die in ihnen enthaltenen Alkalimetallkomponenten, zurückzugewinnen.

In die Verbindungsleitung 11 mündet unterhalb der Schleuse 12 (also in Transportrichtung der Stromspeicher gesehen stromab zur Schleuse 12) eine Zuleitung 15 für flüssiges oder kaltes gasförmiges Argon ein, die mit einem Tank 16 für flüssiges Argon strömungsverbunden ist. Aus der Ausgangsleitung 13 mündet eine Ausleitung 17 für gasförmiges Argon aus, in der ein Gebläse 18 angeordnet ist. Stromab zum Gebläse 18 zweigt von der Ausleitung 17 eine Argon-Rückleitung 19 ab, die in die Verbindungsleitung 11, unterhalb der Schleuse 12, einmündet. Die Argon-Rückleitung 19 ist an einem indirekten Wärmetauscher 20 mit der Stickstoff-Ausleitung 10 thermisch verbunden.

Im Betrieb der Vorrichtung 1 werden zu recycelnde Stromspeicher, die bevorzugt in einer hier nicht gezeigten Vorbehandlung zuvor entladen wurden, über den Aufgabetrichter 7 und der Aufgabeeinheit 6 der Kühleinrichtung 2 zugeführt. Mittels der Förderschnecke 5 werden die Stromspeicher vorwärts, in Richtung der Verbindungsleitung 11 bewegt und dabei mit flüssigem Stickstoff mit einer Temperatur von beispielsweise -196°C aus der Zuleitung 8 beaufschlagt, wobei sie stark, beispielsweise auf eine Temperatur zwischen -30°C und -150°C abgekühlt werden. Der beim Wärmekontakt mit den Stromspeichern verdampfende Stickstoff wird über die Stickstoff-Ausleitung 10 abgeführt und in die Atmosphäre entlassen oder einer anderweitigen Verwendung zugeführt, beispielsweise als Inertgas in einem späteren Behandlungsschritt bei der Wiedergewinnung der in den Stromspeichern enthaltenen Rohstoffe. Die Temperatur in der Verbindungsleitung 11, stromauf zur Schleuse 12, wird an einer Messstelle 21 erfasst und dient als die Regelgröße, mittels der die Zuführung des flüssigen Stickstoffs über die Zuleitung 8 gesteuert wird.

Die gekühlten Stromspeicher durchlaufen die Verbindungsleitung 11 und fallen in die Zerkleinerungseinrichtung 3 und werden dort zerkleinert, im Ausführungsbeispiel zermahlen. In der Zerkleinerungseinrichtung 3 herrscht eine trockenkalte Argon-Atmosphäre vor, die verhindert, dass während des Mahlprozesses in den Stromspeichern enthaltene Alkalimetallkomponenten, insbesondere Lithium enthaltende Komponenten, mit Stickstoff, Sauerstoff, Feuchtigkeit oder anderen Bestandteilen der Umgebungsatmosphäre reagieren können. Zur Herstellung der kalten Argon-Atmosphäre in der Zerkleinerungseinrichtung wird Argon, bevorzugt flüssiges oder kaltes gasförmiges Argon mit einer Temperatur von beispielsweise -186°C aus dem Tank 16 über die Zuleitung 15 herangeführt und in die Verbindungsleitung 11 eingesprüht. Die Schleuse 12 verhindert dabei zumindest weitgehend das Eindringen von Stickstoff aus der Kühleinrichtung 2 in die Zerkleinerungseinrichtung 3. Die durch den Mahlvorgang eingetragene Wärme wird weitgehend vom Argon aufgenommen, das anschließend gasförmig mit einer Temperatur von beispielsweise zwischen 0°C und -50°C über die Ausleitung 17 abgeführt wird. Die zermahlenen Fraktionen der Stromspeicher fallen in den Behälter 14 und weisen dabei immer noch eine Temperatur von unter 0°C auf. Die Temperatur und/oder die Konzentration des Argons in der Zerkleinerungseinrichtung 3 bzw. in der Ausgangsleitung 13 wird an einer Messstelle 22 erfasst und dient als Regelgröße, mittels der die Zuführung des Argons über die Leitungen 15 und/oder 19 gesteuert wird.

In dem in Fig. 1 gezeigten Ausführungsbeispiel wird das Argon aus der Ausleitung 17 teilweise im Kreislauf geführt und erneut zur Herstellung der Argon-Atmosphäre in der Zerkleinerungseirichtung 3 eingesetzt. Dazu wird zumindest ein Teilstrom des Argons mittels des Gebläses 18 durch die Argon-Rückleitung 19 gefördert und im Wärmetauscher 20 in thermischen Kontakt mit verdampftem Stickstoff aus der Stickstoff-Ausleitung 10 gebracht, der noch eine recht tiefe Temperatur von beispielsweise -100°C besitzt. Beim Wärmetausch mit dem Stickstoff kühlt das Argon auf eine Temperatur von beispielsweise -80°C ab und gelangt anschließend in die Verbindungsleitung 11. Die Temperatur des Argons in der Argon-Rückleitung 19, stromab zum Wärmetauscher 20, wird an einer Messstelle 23 laufend erfasst; Genügt die gemessene Temperatur nicht einem bestimmten, vorgegebenem Höchstwert, kann über eine Flüssigstickstoffzuleitung 24 flüssiger Stickstoff direkt aus dem Tank 9 entnommen und dem gasförmigen Stickstoff in der Stickstoff-Ausleitung 10 beigemischt und so dessen Temperatur abgesenkt werden. Der nicht in die Argon-Rückleitung 19 eingespeiste Teilstrom des Argons wird über eine Argon-Ableitung 25 abgeführt und anderen Verwendungen zugeführt, beispielsweise als Inertgas in nachfolgenden Schritten der Wiedergewinnung von Alkalimetallen aus dem Fraktionen der Stromspeicher.

Im Übrigen kann anstelle der hier gezeigten Kühleinrichtung 3 mit einer in einem Gehäuse 4 aufgenommenen Förderschnecke 5 eine andere Kühleinrichtung vorgesehen sein, beispielsweise ein Kühltunnel oder ein Behälter, der zur Aufnahme eines Bades aus flüssigem Stickstoff bestimmt ist, in dem sich die zu recycelnden Stromspeicher für eine gewisse Zeit aufhalten und auf eine vorgegebene Temperatur abkühlen, bevor sie der Zerkleinerungseinrichtung 3 zugeführt werden. Auch eine Kombination mehrerer Kühleinrichtungen ist im Rahmen der Erfindung vorstellbar. Beispielsweise werden die Stromspeicher zunächst in einem Bad aus flüssigem Stickstoff gekühlt und dann mittels einer Fördereinrichtung, die ihrerseits mit einem kryogenen Kältemittel - flüssiger oder kalter gasförmiger Stickstoff oder flüssiges oder kaltes gasförmiges Argon - beaufschlagt wird, der Zerkleinerungseinrichtung zugeführt. Ebenso können auch andere Zerkleinerungseinrichtungen 3 anstelle der hier gezeigten Mühle zum Einsatz kommen, wie beispielsweise ein Schredder, ein Brecher, ein Sägeeinrichtung, ein Schneidwerkzeug oder eine Kombination verschiedener Zerkleinerungswerkzeuge.

In einer besonders einfachen Ausgestaltung kann die Zerkleinerungseinrichtung selbst als Kühleinrichtung fungieren. In diesem Fall werden die noch intakten Stromspeicher der Zerkleinerungseinrichtung zugeführt und in der Zerkleinerungseinrichtung zunächst mit flüssigem Stickstoff gekühlt, bis eine vorgegebene Temperatur erreicht ist. Der dabei verdampfende Stickstoff wird abgeführt. Im Anschluss daran wird die Zerkleinerungseinrichtung mit Argon geflutet, das den verbliebenen Stickstoff verdrängt und eine inerte und zugleich kühlende Argon-Atmosphäre innerhalb der Zerkleinerungseinrichtung aufbaut. Erst im Anschluss daran wird die Zerkleinerungseinrichtung in Gang gesetzt und die Fraktionierung der Stromspeicher beginnt. Eine separate Kühleinrichtung ist in diesem Fall nicht erforderlich. Weiterhin dient das der Zerkleinerungseinrichtung zugeführte Argon vor allem zu deren Inertisierung; das Argon muss daher nicht zwingend bei tiefen Temperaturen vorliegen, jedoch ist dies im Rahmen der Erfindung bevorzugt.

Die erfindungsgemäße Trennung von Stickstoff-Atmosphäre in der Kühleinrichtung 2 einerseits und Argon-Atmosphäre in der Zerkleinerungseinrichtung 3 andererseits ermöglicht eine vergleichsweise preiswerte Kühlung mittels Stickstoff und eine zuverlässige Inertisierung während des Zerkleinerungsprozesses. Insbesondere verhindert sie, dass beim Zerkleinerungsprozess in den Stromspeichern enthaltene Alkalimetalle, insbesondere Lithium, Natrium oder Kalium, mit Bestandteilen aus der Umgebungsatmosphäre oder mit als Kühlmittel eingesetztem Stickstoff Atmosphäre reagieren und dadurch die Anlage insgesamt beschädigen.

### Bezugszeichenliste

- 1: Vorrichtung
- 2: Kühleinrichtung
- 3: Zerkleinerungseinrichtung
- 4: Gehäuse
- 5: Förderschnecke
- 6: Aufgabeeinheit
- 7: Aufgabetrichter
- 8: Zuleitung
- 9: Tank für Flüssigstickstoff
- 10: Stickstoff-Ausleitung
- 11: Verbindungsleitung
- 12: Schleuse
- 13: Ausgangsleitung
- 14: Behälter
- 15: Zuleitung
- 16: Tank für flüssiges Argon
- 17: Ausleitung
- 18: Gebläse
- 19: Argon-Rückleitung
- 20: Wärmetauscher
- 21: Messstelle
- 22: Messstelle
- 23: Messstelle
- 24: Flüssigstickstoffzuleitung
- 25: Argon-Ableitung

## Patentansprüche

1. Verfahren zum Zerkleinern von alkalimetallhaltigen Stromspeichern, bei dem die Stromspeicher mit flüssigem Stickstoff gekühlt werden, der beim Wärmekontakt mit den Stromspeichern zumindest weitgehend verdampft, und die Stromspeicher anschließend in einer Zerkleinerungseinrichtung (3) in Fraktionsbestandteile zerlegt werden, wobei
der Zerkleinerungseinrichtung (3) im Anschluss an die Kühlung der Stromspeicher Argon, unter Ausbildung einer im Wesentlichen aus Argon bestehende Atmosphäre in der Zerkleinerungseinrichtung (3), zugeführt wird, **dadurch gekennzeichnet,**
**dass** der Zerkleinerungseinrichtung (3) flüssiges oder kaltes gasförmiges Argon zugeführt wird, das sich beim thermischen Kontakt mit den Stromspeichern und/oder deren Fraktionsbestandteilen erwärmt und anschließend aus der Zerkleinerungseinrichtung (3) abgeführt wird, wobei zumindest ein Teilstrom des aus der Zerkleinerungseinrichtung (3) abgeführten, erwärmten Argons in einem Kühler (20) gekühlt und erneut zur Kühlung der Stromspeicher in der Zerkleinerungseinrichtung (3) eingesetzt wird.

2. Verfahren nach Anspruch 1, **dadurch gekennzeichnet, dass** die Kühlung der Stromspeicher mit flüssigem Stickstoff in einer von der Zerkleinerungsvorrichtung getrennten Kühleinrichtung (2) erfolgt und die gekühlten Stromspeicher anschließend der Zerkleinerungseinrichtung (3) zugeführt werden.

3. Verfahren nach Anspruch 2, **dadurch gekennzeichnet, dass** die Zuführung der gekühlten Stromspeicher aus der Kühleinrichtung (2) in die Zerkleinerungseinrichtung (3) unter Luftabschluss in einer inerten Atmosphäre erfolgt.

4. Verfahren nach einem der Ansprüche 2 oder 3, **dadurch gekennzeichnet, dass** die Zuführung der Stromspeicher aus der Kühleinrichtung (2) in die Zerkleinerungseinrichtung (3) kontinuierlich oder chargenweise erfolgt.

5. Verfahren nach Anspruch 4, **dadurch gekennzeichnet, dass** die Kühlung des Teilstroms des Argons im Kühler (20) zumindest teilweise durch indirekten thermischen Kontakt mit aus der Kühleinrichtung (2) abgeführtem verdampftem Stickstoff erfolgt.

6. Vorrichtung zum Zerkleinern von alkalimetallhaltigen Stromspeichern, mit einer Kühleinrichtung (2), die eine Zuführung (6) für die Stromspeicher, eine mit einer Quelle (9) für flüssigen Stickstoff strömungsverbundene Zuleitung (8) für flüssigen Stickstoff sowie eine Ausleitung (10) für gasförmigen Stickstoff aufweist, und mit einer Zerkleinerungseinrichtung (3), die mit einer Zuführung (11) für die in der Kühleinrichtung (2) gekühlten Stromspeicher und einer Ausgabe (13) für die bei der Zerkleinerung entstandenen Fraktionsbestandteile der Stromspeicher ausgerüstet ist und die mit einer an eine Quelle (16) für Argon angeschlossenen Zuleitung (15) sowie mit einer Gasausleitung (17) strömungsverbunden ist,
**dadurch gekennzeichnet,**
**dass** die Gasausleitung (17) der Zerkleinerungseinrichtung (3) über eine Rückleitung (19) mit der Zerkleinerungseinrichtung (3) oder einer in die Zerkleinerungseinrichtung (3) einmündenden Zuleitung (11) strömungsverbunden ist, wobei in der Rückleitung (19) ein Kühler (20) zum Kühlen des Argons angeordnet ist.

7. Vorrichtung nach Anspruch 6, **dadurch gekennzeichnet, dass** die Kühleinrichtung (2) eine in einem Gehäuse (4) aufgenommene und mit einer Zuführung für flüssigen Stickstoff ausgerüstete Fördereinrichtung (5) umfasst.

8. Vorrichtung nach Anspruch 6 oder 7, **dadurch gekennzeichnet, dass** die Kühleinrichtung (2) einen zur Aufnahme eines Bades aus flüssigem Stickstoff bestimmten Behälter umfasst.

9. Vorrichtung nach einer der Ansprüche 6 bis 8 **dadurch gekennzeichnet, dass** die Kühleinrichtung (2) über eine Verbindungsleitung (11) mit der Zerkleinerungseinrichtung (3) verbunden ist und in der Verbindungsleitung (11) eine Schleuse (12) zur Trennung des Stickstoff-Atmosphäre in der Kühleinrichtung (2) und der Argon-Atmosphäre in der Zerkleinerungseinrichtung (3) vorgesehen ist.

10. Vorrichtung nach einem der Ansprüche 6 bis 9 **dadurch gekennzeichnet, dass** als Zerkleinerungseinrichtung (3) eine Mühle, ein Schredder, eine Presse, eine Sägeeinrichtung oder ein Schneidwerkzeug vorgesehen ist.

11. Vorrichtung nach einem der Ansprüche 6 bis 10, **dadurch gekennzeichnet, dass** als Kühler (20) in der Rückleitung (19) ein mit der Ausleitung (10) für gasförmigen Stickstoff der Kühleinrichtung (2) verbundener, indirekter Wärmetauscher vorgesehen ist.

## Claims

1. Process for comminuting alkali metal-containing energy storage devices where the energy storage devices are cooled with liquid nitrogen which undergoes at least partial evaporation upon thermal contact with the energy storage devices and the energy storage devices are subsequently broken down into constituent fractions in a comminution means (3), wherein
downstream of the cooling of the energy storage devices the comminution means (3) is supplied with argon to form an atmosphere in the comminution means (3) which is substantially composed of argon,
**characterized in that**
the comminution means (3) is supplied with liquid or cold gaseous argon which undergoes heating upon thermal contact with the energy storage devices and/or the constituent fractions thereof and is subsequently discharged from the comminution means (3), wherein at least a substream of the heated argon discharged from the comminution means (3) is cooled in a cooler (20) and reused for cooling the energy storage devices in the comminution means (3).

2. Process according to Claim 1, **characterized in that** the cooling of the energy storage devices with liquid nitrogen is carried out in a cooling means (2) separate from the comminution apparatus and the cooled energy storage devices are subsequently supplied to the comminution means (3).

3. Process according to Claim 2, **characterized in that** the supply of the cooled energy storage devices from the cooling means (2) into the comminution means (3) is carried out with exclusion of air in an inert atmosphere.

4. Process according to either of Claims 2 and 3, **characterized in that** the supply of the energy storage devices from the cooling means (2) into the comminution means (3) is carried out continuously or batchwise.

5. Process according to Claim 4, **characterized in that** the cooling of the substream of the argon in the cooler (20) is at least partially effected by indirect thermal contact with evaporated nitrogen discharged from the cooling means (2).

6. Apparatus for comminuting alkali metal-containing energy storage devices which comprises a cooling means (2) comprising a feed (6) for the energy storage devices, an inflow conduit (8) for liquid nitrogen fluidically connected to a source (9) of liquid nitrogen and an outflow conduit (10) for gaseous nitrogen and comprises a comminution means (3) which is provided with a feed (11) for the energy storage devices cooled in the cooling means (2) and a discharge (13) for the constituent fractions of the energy storage devices formed in the comminution and which is fluidically connected to an inflow conduit (15), which is connected to a source (16) of argon, and to a gas outflow conduit (17),
**characterized in that**
the gas outflow conduit (17) of the comminution means (3) is fluidically connected to the comminution means (3) or an inflow conduit (11) opening into the comminution means (3) via a return conduit (19), wherein a cooler (20) for cooling the argon is arranged in the return conduit (19).

7. Apparatus according to Claim 6, **characterized in that** the cooling means (2) comprises a conveying means (5) accommodated in a housing (4) and provided with a feed for liquid nitrogen.

8. Apparatus according to Claim 6 or 7, **characterized in that** the cooling means (2) comprises a container for accommodating a bath of liquid nitrogen.

9. Apparatus according to any of Claims 6 to 8, **characterized in that** the cooling means (2) is connected to the comminution means (3) via a connection conduit (11) and the connection conduit (11) has provided in it a lock (12) for separating the nitrogen atmosphere in the cooling means (2) and the argon atmosphere in the comminution means (3).

10. Apparatus according to any of Claims 6 to 9, **characterized in that** the comminution means (3) provided is a mill, a shredder, a press, a sawing means or a cutting tool.

11. Apparatus according to any of Claims 6 to 10, **characterized in that** the cooler (20) provided in the return conduit (19) is an indirect heat exchanger connected to the outflow conduit (10) for gaseous nitrogen of the cooling means (2).

## Revendications

1. Procédé permettant de broyer des accumulateurs de courant contenant des métaux alcalins, dans lequel les accumulateurs de courant sont refroidis par de l'azote liquide qui s'évapore au moins largement au contact thermique avec les accumulateurs de courant, et les accumulateurs de courant sont ensuite décomposés en composants de fraction dans un dispositif de broyage (3), dans lequel
suite au refroidissement des accumulateurs de courant, de l'argon est amené au dispositif de broyage (3) en réalisant une atmosphère substantiellement composée d'argon dans le dispositif de broyage (3),
**caractérisé en ce que** de l'argon liquide ou gazeux froid est amené au dispositif de broyage (3), qui se réchauffe au contact thermique avec les accumulateurs de courant et/ou de leurs composants de fraction et est ensuite évacué du dispositif de broyage (3), dans lequel au moins un flux partiel de l'argon réchauffé, évacué du dispositif de broyage (3), est refroidi dans un condenseur (20) et est réutilisé pour refroidir les accumulateurs de courant dans le dispositif de broyage (3) .

2. Procédé selon la revendication 1, **caractérisé en ce que** le refroidissement des accumulateurs de courant avec de l'azote liquide est effectué dans un dispositif de refroidissement (2) séparé du dispositif de broyage, et les accumulateurs de courant refroidis sont ensuite amenés au dispositif de broyage (3).

3. Procédé selon la revendication 2, **caractérisé en ce que** l'amenée des accumulateurs de courant refroidis du dispositif de refroidissement (2) dans le dispositif de broyage (3) est effectuée à l'abri de l'air dans une atmosphère inerte.

4. Procédé selon l'une quelconque des revendications 2 ou 3, **caractérisé en ce que** l'amenée des accumulateurs de courant du dispositif de refroidissement (2) dans le dispositif de broyage (3) est effectuée en continu ou par charges successives.

5. Procédé selon la revendication 4, **caractérisé en ce que** le refroidissement du flux partiel de l'argon dans le condenseur (20) est effectué au moins partiellement par contact thermique indirect avec de l'azote évaporé, évacué du dispositif de refroidissement (2).

6. Dispositif permettant de broyer des accumulateurs de courant contenant des métaux alcalins, comprenant un dispositif de refroidissement (2) qui présente une amenée (6) pour les accumulateurs de courant, une conduite d'alimentation (8) pour de l'azote liquide en communication fluidique avec une source (9) d'azote liquide, ainsi qu'une conduite de sortie (10) pour de l'azote gazeux, et comprenant un dispositif de broyage (3) qui est équipé d'une amenée (11) pour les accumulateurs de courant refroidis dans le dispositif de refroidissement (2) et d'une sortie (13) pour les composants de fraction des accumulateurs de courant créés lors du broyage, et qui est en communication fluidique avec une conduite d'alimentation (15) raccordée à une source (16) d'argon ainsi qu'avec une conduite de sortie de gaz (17),
**caractérisé en ce que** la conduite de sortie de gaz (17) du dispositif de broyage (3) est en communication fluidique avec le dispositif de broyage (3) par une conduite de retour (19) ou avec une conduite d'alimentation (11) débouchant sur le dispositif de broyage (3), dans lequel un condenseur (20) est disposé dans la conduite de retour (19) pour refroidir l'argon.

7. Dispositif selon la revendication 6, **caractérisé en ce que** le dispositif de refroidissement (2) comprend un dispositif de convoyage (5) reçu dans un carter (4) et équipé d'une amenée pour l'azote liquide.

8. Dispositif selon la revendication 6 ou 7, **caractérisé en ce que** le dispositif de refroidissement (2) comprend un récipient destiné à recevoir un bain d'azote liquide.

9. Dispositif selon l'une quelconque des revendications précédentes 6 à 8, **caractérisé en ce que** le dispositif de refroidissement (2) est raccordé au dispositif de broyage (3) par une conduite de raccordement (11), et un sas (12) est prévu dans la conduite de raccordement (11) pour séparer l'atmosphère d'azote dans le dispositif de refroidissement (2) et l'atmosphère d'argon dans le dispositif de broyage (3).

10. Dispositif selon l'une quelconque des revendications 6 à 9, **caractérisé en ce qu'**un broyeur, un déchiqueteur, une presse, un dispositif à scie ou un outil de coupe est prévu(e) comme dispositif de broyage (3) .

11. Dispositif selon l'une quelconque des revendications 6 à 10, **caractérisé en ce qu'**un échangeur thermique indirect raccordé à la conduite de sortie (10) pour l'azote liquide du dispositif de refroidissement (2) est prévu comme condenseur (20) dans la conduite de retour (19).
